# EUROPEAN PATENT APPLICATION

(11) **EP 2 098 318 A1**
(43) Date of publication of application: **09.09.2009**
(21) Application number: 08157157.2
(22) Date of filing: 29.05.2008
(51) Int. Cl.: B23B 29/32

(54) **Turret assembly for a CNC lathe**

(30) Priority: 04.03.2008 TW 97107478
(71) Applicant: Alex-Tech Machinery Industrial Co. Ltd., Shen Kang Hsiang Taichung Hsien (TW)
(72) Inventor: Tsai, Peter, Taipei City (TW)
(74) Representative: Finnie, Peter John

(57) **Abstract**

A turret assembly for a CNC lathe includes a base unit (20), a toolholding unit (30) disposed rotatably on the base unit (20) and having a mounting surface (32) adapted to allow a plurality of cutting tools (100) to be held thereon, and a driving unit (40) including a motor (42), a driving wheel (43) driven by the motor (42), and a driven wheel (45) adapted to be connectable with the cutting tool (100) and connected to the driving wheel (43) such that rotation of the driving wheel (43) is transferred to the driven wheel (45). The driving unit (40) further includes a housing (41) disposed outwardly of the base unit (20), and a speed reduction device interconnecting the driving wheel (43) and the driven wheel (45) to allow the driven wheel (45) to rotate at a speed slower than that of the driving wheel (43). The motor (42) is disposed on the housing (41). The driving wheel (43) and the driven wheel (45) are disposed rotatably in the housing (41).

## Description

This invention relates to a CNC lather, and more particularly to a VDI (Vereins Deutscher Ingenieure) turret assembly for a CNC lathe.

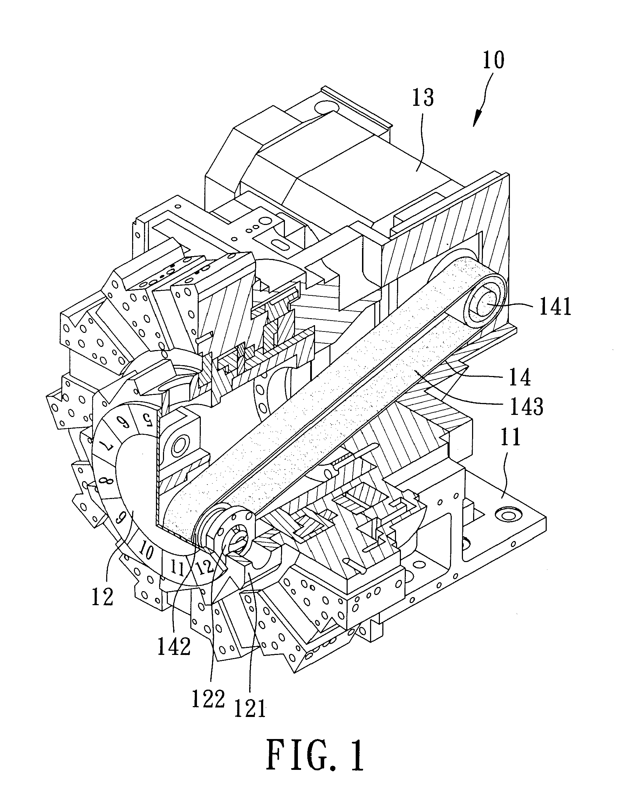

Referring to Fig. 1, a VDI turret assembly 10 of a conventional CNC lathe includes a base 11, a toolholder 12 disposed rotatably on the base 11, a motor 13 disposed on the base 11, and a driving mechanism 14 disposed within the base 11. The toolholder 12 has a plurality of mounting surfaces 121 arranged along a circumferential direction of the toolholder 12. Each of the mounting surfaces 121 is provided with an output shaft 122 for mounting with a cutting tool (not shown). The driving mechanism 14 includes a driving pulley 141 disposed in the base 11 and driven by the motor 13, a driven pulley 142 disposed in the toolholder 12, and a transmission belt 143 trained on the driving pulley 141 and the driven pulley 142. As such, rotation of the driving pulley 141 can be transferred to the driven pulley 142. However, since the driving pulley 141 and the driven pulley 142 rotate at the same speed, the output torque of the cutting tool is limited. As a result, the conventional CNC lathe cannot be used to perform a high-power cutting operation.

The object of this invention is to provide a VDI turret assembly for a CNC lathe that includes a speed reduction device so that the CNC lathe can be used to perform a high-power cutting operation.

According to this invention, there is provided a turret assembly for a CNC lathe including:
a base unit;
a toolholding unit disposed rotatably on the base unit and having a mounting surface adapted to allow a plurality of cutting tools to be held thereon; and
   a driving unit including a motor, a driving wheel driven by the motor, a driven wheel adapted to be connectable with a selected one the cutting tools and connected to the driving wheel such that rotation of the driving wheel is transferred to the driven wheel;
   **characterized in that** the driving unit further includes a housing disposed outwardly of the base unit, and a speed reduction device interconnecting the driving wheel and the driven wheel to allow the driven wheel to rotate at a speed slower than that of the driving wheel, the motor being disposed on the housing, the driving wheel and the driven wheel being disposed rotatably in the housing.

These and other features and advantages of this invention will become apparent in the following detailed description of the preferred embodiments of this invention, with reference to the accompanying drawings, in which:
Fig. 1 is a partly sectional, perspective view of a VDI turret assembly of a conventional CNC lathe;
Fig. 2 is a perspective view of the first preferred embodiment of a turret assembly for a CNC lathe according to this invention;
Fig. 3 is a side view of the first preferred embodiment;
Fig. 4 is a schematic, partly sectional side view of the first preferred embodiment, illustrating a driving unit;
Fig. 5 is a partly sectional side view of the first preferred embodiment illustrating an engagement position of a driven gear;
Fig. 6 is a view similar to Fig. 5 but illustrating a disengagement position of the driven gear;
Fig. 7 is a schematic side view of the second preferred embodiment of a turret assembly of a CNC lathe according to this invention, illustrating a modified driving unit; and
Fig. 8 is a partly sectional side view of the second
preferred embodiment.

Before the present invention is described in greater detail in connection with the preferred embodiments, it should be noted that similar elements and structures are designated by like reference numerals throughout the entire disclosure.

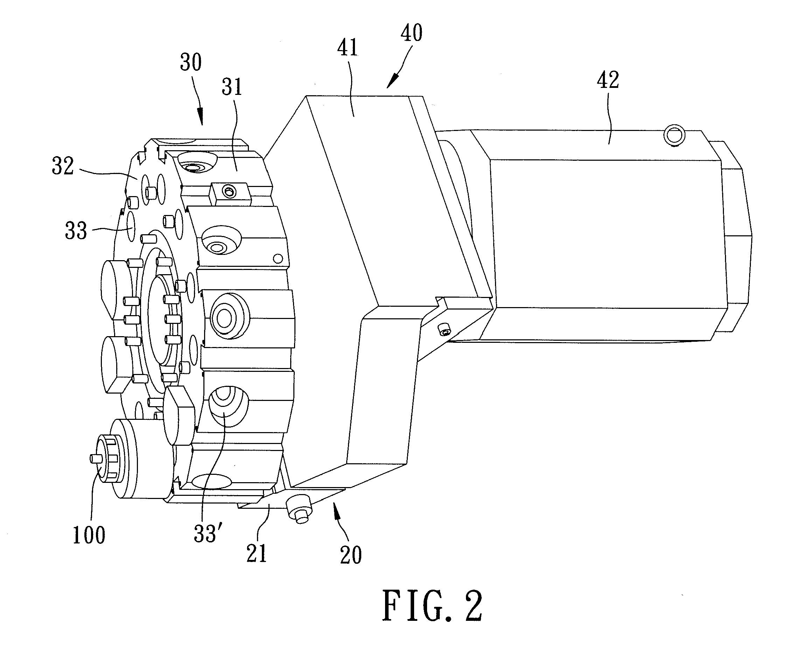

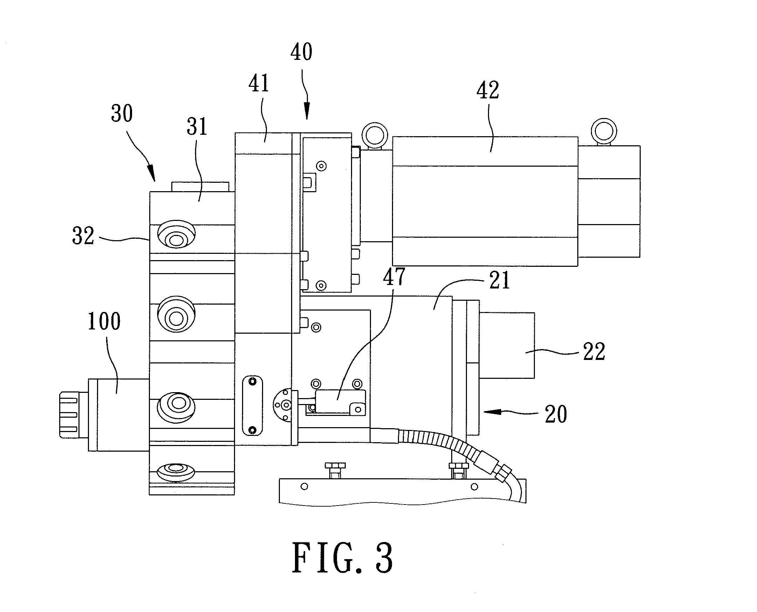

Referring to Figs. 2 and 3, the first preferred embodiment of a turret assembly for a CNC lathe according to this invention includes a base unit 20, a toolholding unit 30, and a driving unit 40.

The base unit 20 includes a base body 21, and a holder-driving motor 22 disposed on the base body 21 and operable to rotate the toolholding unit 30.

The toolholding unit 30 is disposed rotatably on the base body 21, and has a plurality of peripheral mounting surfaces 31 arranged along a circumferential direction, and a side mounting surface 32 formed with a plurality of angularly equidistant first mounting holes 33. Each of the peripheral mounting surfaces 31 is formed with a second mounting hole 33'. The first mounting holes 33 are staggered with respect to the second mounting holes 33' along the circumferential direction, and are mounted respectively with a plurality of cutting tools 100 (only one is shown to be mounted within one of the first mounting holes 33). In this embodiment, the toolholding unit 30 has two opposite side surfaces, one of which constitutes the side mounting surface 32.

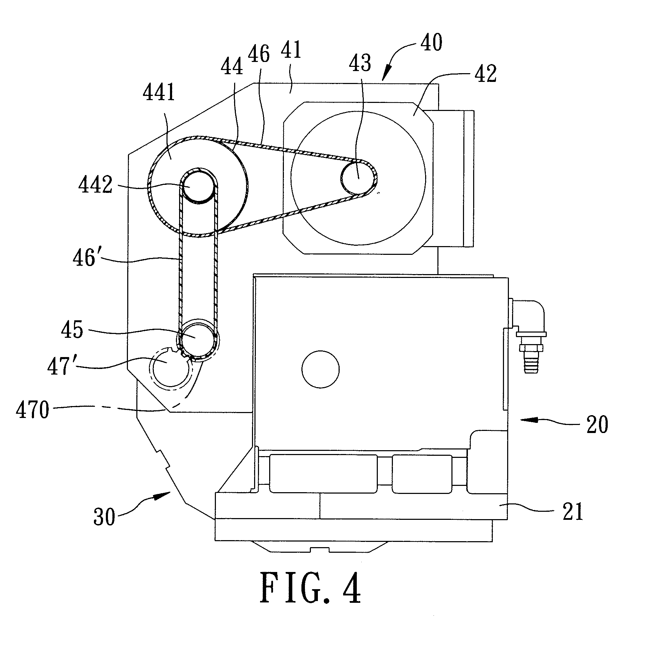

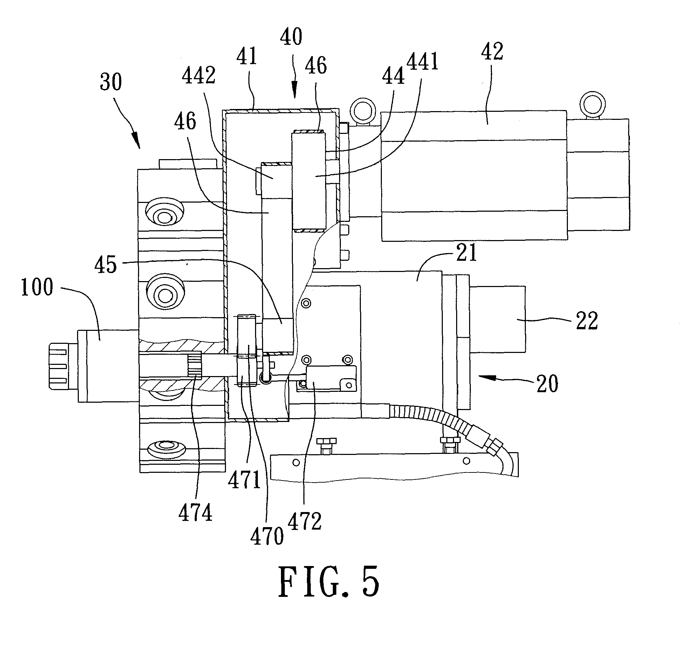

With additional reference to Figs. 4 and 5, the driving unit 40 includes a housing 41, a motor 42, a driving wheel 43 configured as a belt pulley, a dual-stepped intermediate pulley 44, a driven wheel 45 configured as a belt pulley, a first transmission belt 46, a second transmission belt 46' , and a clutch mechanism 47. The housing 41 is disposed outwardly of the base unit 20. The motor 42 is disposed on the housing 41. The driving wheel 43 is disposed rotatably in an upper portion of the housing 41, and is driven by the motor 42. The driven wheel 45 is disposed rotatably in a lower portion of the housing 41. The dual-stepped intermediate pulley 44 is disposed in the upper portion of the housing 41 and directly above the driven wheel 45, and has a large-diameter pulley portion 441 and a small-diameter pulley portion 442 having a diameter smaller than that of the large-diameter pulley portion 441. The first transmission belt 46 is trained on the driving wheel 43 and the large-diameter pulley portion 441. The second transmission belt 46' is trained on the small-diameter pulley portion 442 and the driven wheel 45. The dual-stepped intermediate pulley 44 cooperates with the first and second transmission belts 46, 46' to constitute a speed reduction device. As such, rotation of the driving wheel 43 can be transferred to the driven wheel 45 so as to allow the driven wheel 45 to rotate at a speed slower than that of the driving wheel 43. Due to the presence of the speed reduction device, a large torque can be output from the driving unit 40. Thus, the CNC lathe of this invention can be used to perform a high-power cutting operation.

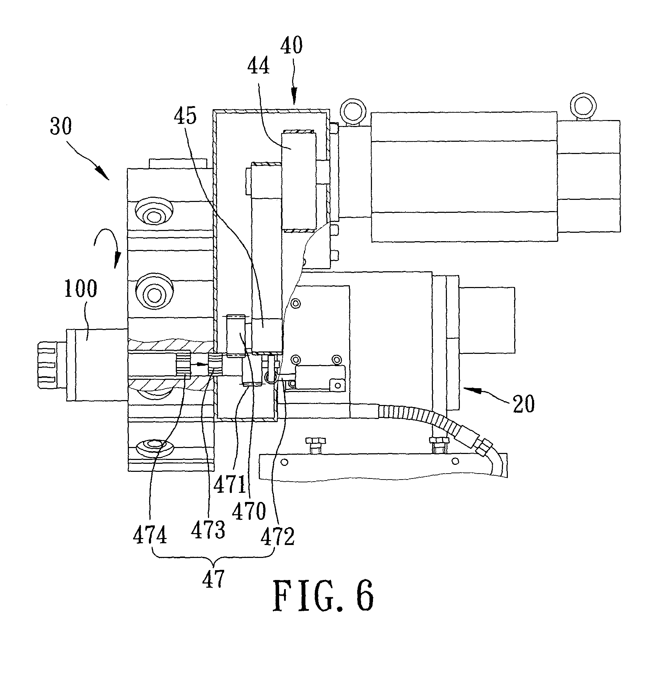

Each of the cutting tools 100 is provided with an internally splined member 474 connected coaxially and fixedly thereto. The clutch mechanism 47 includes a driving gear 470 connected coaxially and fixedly to the driven wheel 45, a driven gear 471, a driving member 472 operable to move the driven gear 471 to move between an engagement position shown in Fig. 5 and a disengagement position shown in Fig. 6, and an externally splined member 473 connected coaxially and fixedly to the driven gear 471. The toolholding unit 30 can be rotated to align a selected one of the cutting tools 100 with the externally splined member 473. When the driven gear 471 is disposed in the engagement position, the driving gear 470 meshes with the driven gear 471, and the externally splined member 473 engages the internally splined member 474 so that rotation of the driven wheel 45 is transferred to the selected cutting tool 100. When the driven gear 471 is disposed in the disengagement position, the driven gear 471 and the externally splined member 473 are removed respectively from the driving gear 470 and the internally splined member 474 so that rotation of the driven wheel 45 cannot be transferred to the selected cutting tool 100.

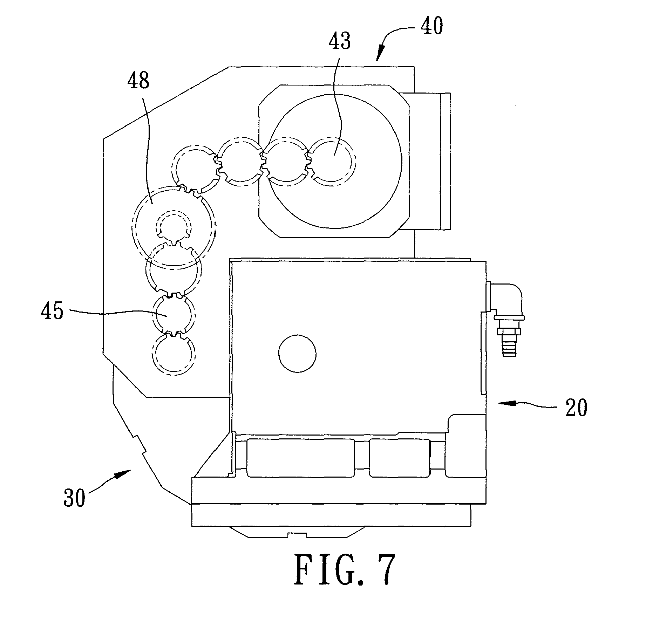

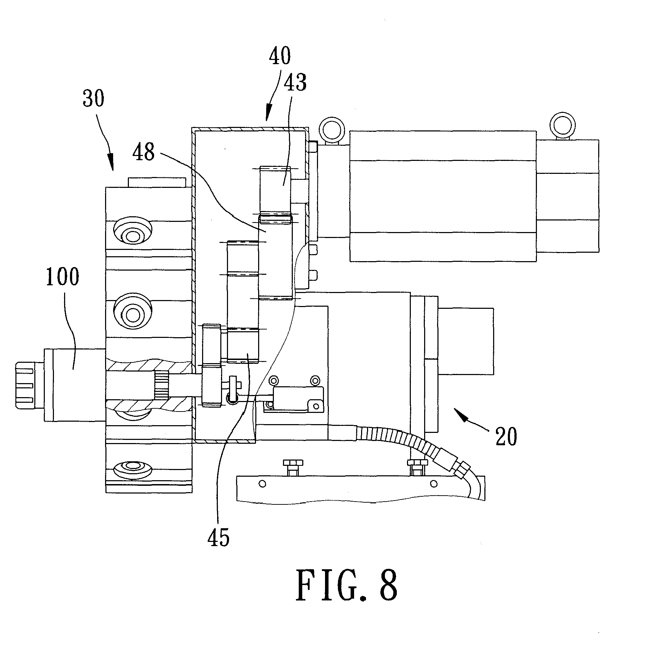

Figs. 7 and 8 show the second preferred embodiment of a turret assembly according to this invention, which is similar in construction to the first preferred embodiment. In this embodiment, the driving wheel 43 and the driven wheel 45 are configured as gears, and the speed reduction device includes a plurality of intermediate gears 48, two of which mesh respectively with the driving wheel 43 and the driven wheel 45.

## Claims

1. A turret assembly of a CNC lathe including:
a base unit (20);
a toolholding unit (30) disposed rotatably on the base unit (20) and having a mounting surface (32) adapted to allow a plurality of cutting tools (100) to be held thereon; and
a driving unit (40) including a motor (42), a driving wheel (43) driven by the motor (42), a driven wheel (45) adapted to be connectable with a selected one of the cutting tools (100) and connected to the driving wheel (43) such that rotation of the driving wheel (43) is transferred to the driven wheel (45);
**characterized in that** the driving unit (40) further includes a housing (41) disposed outwardly of the base unit (20), and a speed reduction device interconnecting the driving wheel (43) and the driven wheel (45) to allow the driven wheel (45) to rotate at a speed slower than that of the driving wheel (43), the motor (42) being disposed on the housing (41), the driving wheel (43) and the driven wheel (45) being disposed rotatably in the housing (41).

2. The turret assembly as claimed in Claim 1, further **characterized in that** the driving wheel (43) and the driven wheel (45) are configured as belt pulleys, and the speed reduction device includes a dual-stepped intermediate pulley (44) having a large-diameter pulley portion (441) and a small-diameter pulley portion (442) having a diameter smaller than that of the large-diameter pulley portion (441), a first transmission belt (46) trained on the driving wheel (43) and the large-diameter pulley portion (441), and a second transmission belt (46') trained on the small-diameter pulley portion (442) and the driven wheel (45).

3. The turret assembly as claimed in Claim 1, further **characterized in that** the driving wheel (43) and the driven wheel (45) are configured as gears, and the speed reduction device includes a plurality of intermediate gears (48), two of which mesh respectively with the driving wheel (43) and the driven wheel (45).

4. The turret assembly as claimed in Claim 1, further **characterized in that** the driving unit (40) further includes a clutch mechanism (47), the clutch mechanism (47) including a driving gear (470) connected coaxially and fixedly to the driven wheel (45), a driven gear (471) adapted to be connectable with the cutting tool (100), and a driving member (472) operable to move the driven gear (471) between an engagement position and a disengagement position, wherein, when the driven gear (471) is disposed in the engagement position, the driving gear (470) meshes with the driven gear (471), and when the driven gear (471) is disposed in the disengagement position, the driven gear (471) is removed from the driving gear (470).

5. The turret assembly as claimed in Claim 1, further **characterized in that** the toolholding unit (30) has two opposite side surfaces, on of which constitutes the mounting surface (32).
